Europäisches Patentamt

European Patent Office

Office européen des brevets

(19)

(11) Publication number: **0 387 809**

**A1**

(12) **EUROPEAN PATENT APPLICATION**

(21) Application number: **90104752.2**

(22) Date of filing: **13.03.90**

(51) Int. Cl.5: **G11B 5/02, G11B 5/80**

(30) Priority: **16.03.89 JP 64435/89**

(43) Date of publication of application:
**19.09.90 Bulletin 90/38**

(84) Designated Contracting States:
**AT BE CH DE ES FR GB GR IT LI LU NL SE**

(71) Applicant: **TONAMI ELECTRIC ENGINEERING CO., LTD.**
**22-5 Toyotamakami 1-chome**
**Nerima-ku, Tokyo 176(JP)**

(72) Inventor: **Kaneko, Mitsuaki**
**20-2, Nishiki 1-chome**
**Nerima-ku, Tokyo 179(JP)**

(74) Representative: **Sajda, Wolf E., Dipl.-Phys. et al**
**MEISSNER, BOLTE & PARTNER**
**Widenmayerstrasse 48 Postfach 86 06 24**
**D-8000 München 86(DE)**

(54) **A method of writing in and reading out data to and from a magnetic card and a reader/writer for such a method.**

(57) A magnetic tape with some coatings of magnetic substances (29, 30) of different susceptibilities applied on the same surface of a magnetic card (1) is prepared first. Then, the data are written in the magnetic card (1) in a high-intensity magnetic field, and a mask is written in a low-intensity magnetic field. To read the data in this magnetic card (1), the mask written in the low-intensity magnetic field is erased, and the readout and processing of the data will follow. A reader/writer (21) for this process is provided with a card drive unit (11) comprising a low-intensity magnetic field write head (12) for the mask, a high-intensity magnetic field write head (14) for the data, a read head (13, 15) for reading the mask and the data, and a card drive (16) for moving the magnetic card (1) forward and backward when writing and reading the mask and the data. A mask writing and reading controller (9) is for controlling the low-intensity magnetic field write head (12) and read head (13). A data writing and reading controller (10) is for controlling the high-intensity magnetic field write head (14) and read head (15).

Fig. 1

## A method of writing in and reading out data to and from a magnetic card and a reader/writer for such a method

The present invention relates to a method of writing in and reading out data to and from a magnetic card which are widely used as so-called prepaid cards, cash cards and ID cards. Also, the invention relates to a reader/writer for such a method.

A typical magnetic card used widely at present consists of a thin synthetic resin sheet and a magnetic coat applied thereon either all over a surface thereof or in a stripe pattern.

The data recorded in such a single magnetic coat can be read easily with a card reader so that a code has to be used when recording highly confidential data. Besides, even recording using a code involves a problem in that the data recorded with the code can easily be forged by copying the whole confidential data.

To cope with such a problem, a magnetic card with double magnetic coats consisting of a high magnetic coat and a low magnetic coat has been proposed in US-A-3 601 913 and US-A-3 761 311, whereas a magnetic card with a single coat consisting of a mixture of high magnetic particles and low magnetic particles is proposed in US-A- 4 237 189.

These magnetic cards are good enough to protect the data from any forgery or abuse, but the conventional devices for writing in and reading out the data to and from these magnetic cards have quite a number of shortcomings in practice.

The first object of the present invention is to provide a method which enables the protection of the recorded confidential data even when the confidential data are recorded without using any complex code.

The second object of the present invention is to provide a method for writing in and reading out the data to and from the magnetic card that cannot be forged even when the recorded data are simply copied, as well as to provide a magnetic card reader/writer in order to carry out such a method in practice.

The present invention relates to a data writing method which is characterized in that the data are first written, in a high-intensity magnetic field, into a magnetic card having a magnetic coat consisting of several kinds of magnetic substances varying in their magnetic susceptibilities, and then the mask is written into the magnetic card in a low-intensity magnetic field.

Also, the present invention relates to a data reading method of a magnetic card wherein the data are written in a high-intensity magnetic field and the mask is written in a low-intensity magnetic field, which is characterized in that the mask, written in the low-intensity magnetic field, is erased first, and then the data, written in the high-intensity magnetic field, are read and processed.

Further, the present invention relates to a device for carrying out these reading and writing methods in practice using a magnetic card and a reader/writer comprising the following components: a low-intensity magnetic field write head for writing the mask in the low intensity magnetic field; a high-intensity field write head for writing the data in the high-intensity magnetic field; a read head for reading the mask and the data; a card drive for moving the magnetic card forward and backward when writing and reading the mask and the data; a motor controller for controlling the card drive; a mask writing and reading controller for controlling the low-intensity magnetic field write head and read head; and a data writing and reading controller for controlling the high-intensity magnetic field write head and read head.

Hereinafter, embodiments of the present invention will be described in detail with reference to the drawings, wherein:

Fig. 1 is a block diagram of a reader/writer according to the present invention;

Fig. 2 is a cross sectional view of a magnetic card to be used in such a reader/writer;

Fig. 3 is a cross-sectional view of a card drive unit of the reader/writer according to the present invention;

Fig. 4 is a flow chart showing the data reading method of the reader/writer according to the present invention;

Fig. 5(a) shows a waveform of the data to which the mask is not applied;

Fig. 5(b) shows a waveform of the data to which the mask is applied; and

Fig. 6(a) and 6(b) show plan views in order to explain the direction of the recording of the data in the form a magnetic stripe.

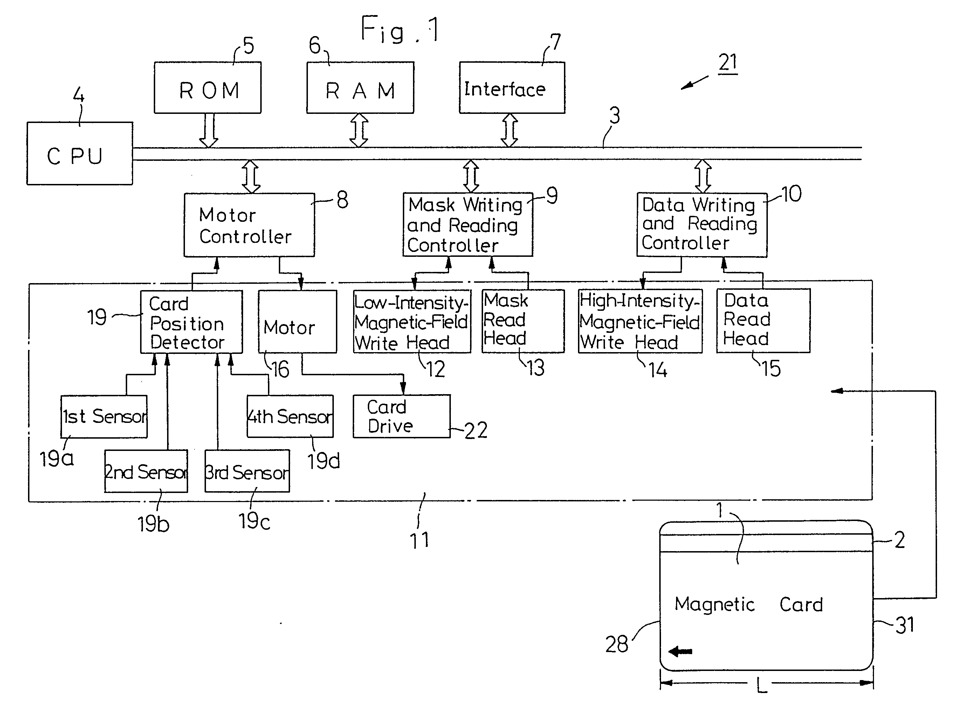

In Fig. 1, the numeral 1 denotes a magnetic card whereon a magnetic coat 2 is formed as a stripe by printing. The magnetic coat 2 consists of a low-intensity magnetic field recording magnetic substance 29 which permits the writing by a low-intensity magnetic field, and a high-intensity magnetic field recording magnetic substance 30 which permits the writing only by a high-intensity magnetic field.

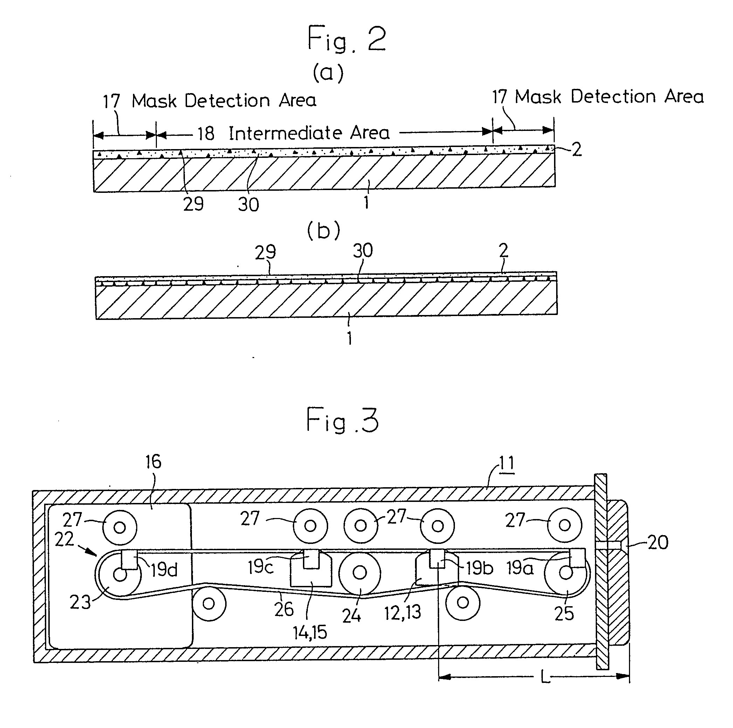

The two magnetic substances 29 and 30 may be applied either in the form of a mixture as shown in Fig. 2(a) or separately by using two layers as shown in Fig. 2(b). The low-intensity magnetic field recording magnetic substance 29 records a mask throughout. Both ends of the magnetic coat 2 are used as a mask detection area 17, so that the data are recorded in an intermediate area 18. The magnetic coat 2 may also be applied all over the surface, instead of using a stripe pattern.

The numeral 21 denotes a reader/writer for writing in and reading out the data to and from the magnetic card 1. The reader/writer 21 comprises a CPU 4 which is connected to a ROM 5, a RAM 6, an interface 7, a motor controller 8, a mask reading and writing controller 9, and a data writing and reading controller 10, respectively, through a bus line 3.

The ROM 5 stores the program for enabling the writing in and reading out the data to and from the magnetic card 1, and the RAM 6 temporarily stores the data, mask and other data. The interface 7 is connected to an external data processing unit when necessary to exchange the respective data with the reader/writer 21.

The numeral 11 denotes a card drive unit. This card drive unit 11 comprises the following components: a low-intensity magnetic field write head 12 and a corresponding mask read head 13, which are connected to the mask writing and reading controller 9; a high-intensity magnetic field write head 14 and a corresponding data read head 15, which are connected to the data writing and reading controller 10; a motor 16 controlled by the motor controller 8; a card drive 22 driven by the motor 16; and a card position detector 19 consisting of four sensors 19a, 19b, 19c and 19d.

As shown in Fig. 3, the card drive 22 comprises a pulley 23 fixed to the motor 16 and follower pulleys 24 and 25 which are connected to each other with a belt 26, and a plurality of rollers 27 in order to hold the magnetic card 1 in position and/or to prevent the magnetic card 1 from rising.

The low-intensity magnetic field write head 12 and the mask read head 13 are disposed at a distance $L$ which is equivalent to the length of the magnetic card 1, from the insertion slot 20 of the magnetic card 1, whereas the high-intensity magnetic field write head 14 and the data read head 15 are disposed at an appropriate distance which is shorter than the length $L$ of the magnetic card, from the low-intensity magnetic field write head 12 and the data read head 13.

The card position detector 19 comprises four sensors, wherein the first sensor 19a is located near the insertion slot 20 of the magnetic card 1; the second sensor 19b is located at the position of the low-intensity magnetic field write head 12 and the mask read head 13; the third sensor 19c is located at the position of the high-intensity magnetic field write head 14 and the data read head 15; and the fourth sensor 19d is disposed at a distance which is not only slightly shorter than the length $L$ of the magnetic card 1, when measured from the position of the second sensor 19b, but also enables the sensor 19d to be turned on when the mask detection area 17 at the rear end 31 of the magnetic card 1 comes to the position of the mask read head 15.

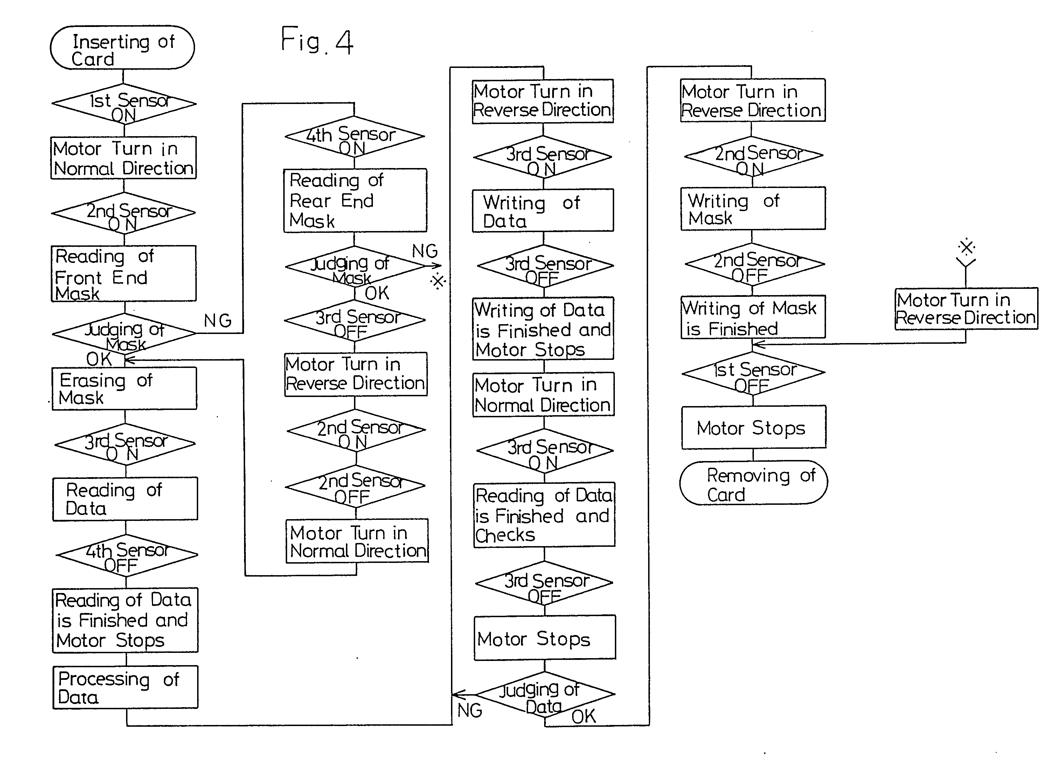

The method for reading the data from the magnetic card 1 will be described hereinafter with reference to the flow chart shown in Fig. 4.

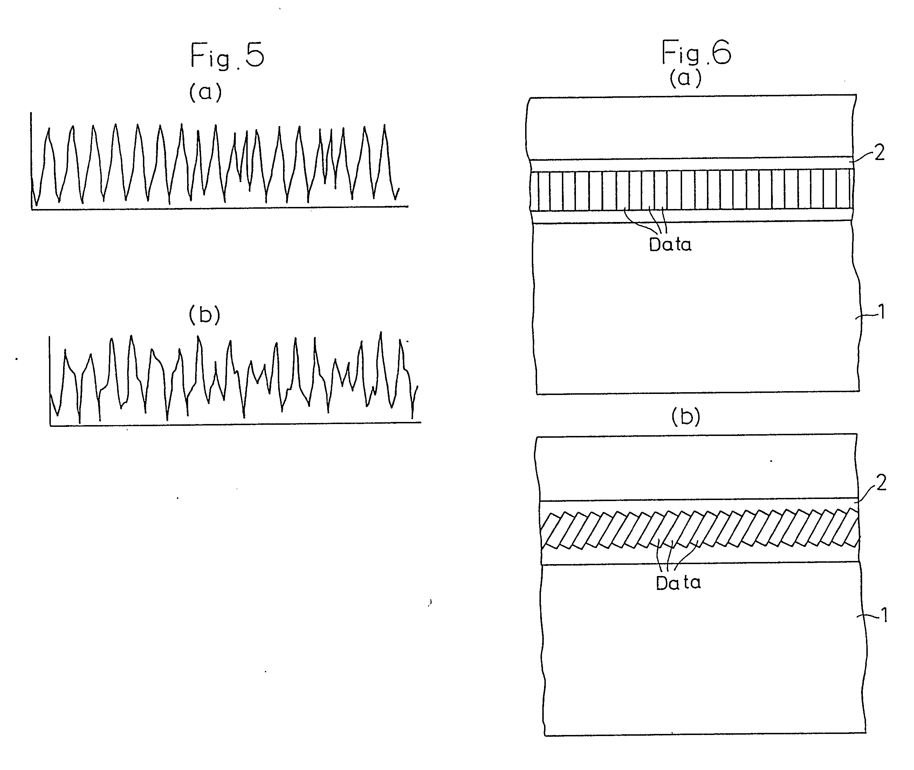

The high-intensity magnetic field recording magnetic substance 30 records the waveform data as shown in Fig. 5(a), and the waveform as shown in Fig. 5(b) can be read when reading the data with the mask recorded in the low-intensity magnetic field recording magnetic substance 29.

The magnetic card 1 with the mask and data recorded thereon is inserted into the card drive unit 11 through the insertion slot 20 in the specified direction. When the front end 28 of the magnetic card 1 is detected by the first sensor 19a, the motor 16 starts turning towards its normal direction so that the magnetic card 1 is fed thereby into the housing of the unit 11.

Then, when the front end 28 is detected by the second sensor 19b, the mask read head 13 reads the mask in the mask detection area 17 on the front end 28 of the magnetic card 1, and whether the mask is in conformity with the specification is judged by the CPU 4. The case wherein the mask is not in conformity with the specification will be described later. When the mask is conform with the specification, the magnetic card 1 proceeds further so that the mask will be erased by the low-intensity magnetic field write head 12.

When the front end 28 is detected by the third sensor 19c, the data read head 15 starts reading the data in the high-intensity magnetic field recording magnetic substance 30. When the rear end 31 has passed the third sensor 19c, the reading of the data is finished, and the motor 16 stops.

When necessary, the data are transmitted to an external general control unit, and the magnetic card 1 receives new data to be recorded through an interface 7. When the processing of the data is finished, regardless of whether any alteration has been made or not, the data re-writing process starts.

More particularly, when the processing of the data has been finished, the motor 16 starts turning reversely according to a command from the CPU 4. When the rear end 31 of the magnetic card 1 is detected by the third sensor 19c, the high-intensity magnetic field write head 14 starts writing the data in the high-intensity magnetic field recording magnetic substance 30.

When the magnetic card 1 has passed the third sensor 19c, the data writing is finished, and the motor 16 stops. Then, the motor 16 resumes turning in its normal direction to resume feeding of the magnetic card 1.

When the front end 28 is detected again by the third sensor 19c, the data read head 15 starts reading the data from the high-intensity magnetic field recording magnetic substance 30 to check the data which have been written. When the passage of the magnetic card 1 is detected by the third sensor 19c, the motor 16 stops, and the appropriateness of the data is checked. If there is any error in the data, the data are re-written.

When there is no error in the data, the motor 16 starts turning inversely, and, when the rear end 31 is detected by the second sensor 19b, the low-intensity magnetic field write head 12 starts writing the mask in the low-intensity magnetic field recording magnetic substance 29.

When the rear end 31 is detected by the first sensor 19a, the mask writing is finished, and the front end 28 of the magnetic card 1 appears from the insertion slot 20 of the magnetic card 1. When the front end 28 has passed the second sensor 19b, the motor 16 stops, and the magnetic card 1 can be removed by hand.

When the result of the check of the mask indicates that the mask is not in conformity with the specification, the motor 16 continues turning, and when the front end 28 is detected by the fourth sensor 19d, the mask read head 13 reads the mask from the mask detection area 17 on the side of the rear end 31 in order to re-check if the mask is in conformity with the specification.

When the mask is confirmed to be in conformity with the specification, the third sensor 19c is turned off, and the motor 16 turns reversely in order to bring back the magnetic card 1. Then, the rear end 31 is detected by the second sensor 19b to cause the sensor 19b to be turned on, and when the second sensor 19b is turned off again by the passage of the front end 28, the motor 16 stars turning in its normal direction to cause that the mask will be erased.

When the result of the check of the mask detection area 17 on the side of the rear end 31 indicates that the specified mask has not been written in its area, the motor 16 starts turning inversely according to a command from the CPU 4 to cause the rear end 31 to be detected by the first sensor 19a, and the front end 28 appears from the insertion slot 20 of the magnetic card 1. When the front end 28 has passed the second sensor 19b, the motor 16 stops, and the magnetic card 1 can be removed by hand.

In the above embodiment, the low-intensity magnetic field write head 12, the high-intensity magnetic field write head 14, the mask read head 13 and the data read head 15, four heads in total, are provided separately for reading out and writing in the data and the mask from and to the magnetic card 1, respectively, but the number of the write heads and read heads may be reduced to one, respectively, by combining the two write heads and two read heads into one, respectively.

In this case, the number of parts can be reduced to lower the manufacturing cost, but the number of the times of the back and forth movements of the magnetic card 1 by the card drive unit 11 will increase, and this requires the write head to be switched between low-intensity magnetic field application and high-intensity magnetic field application. As a result, the control program becomes more complex, and longer time will be required for the processing of the data.

In the above embodiment, even though a special description has not been made, the data may be recorded either in parallel with respect to the feed direction of the magnetic card 1 as shown in Fig. 6(a), or at a certain azimuth angle as shown in Fig. 6(b).

Where the data are recorded at an azimuth angle, a special write head and read head are necessary, but even a small deviation of the azimuth angle makes the data unable to be read by a usual head, so that the secrecy of the data can be maintained more effectively when the recording process using the azimuth is combined with the embodiments described above.

**Claims**

1. A data writing method for writing data in a magnetic card (1), characterized in that a magnetic card (1) is used which consists of a thin sheet of a carrier material and of a coat (2) made of several kinds of magnetic substances (29, 30) varying in their magnetic susceptibilities applied on the surface of the sheet; in that the data are written in the magnetic card (1) in a high-intensity magnetic field; and in that thereafter the mask is written in the magnetic card (1) in a low-intensity magnetic field.

2. A data reading method for reading data from a magnetic card (1), characterized in that a magnetic card (1) is used, wherein the data are written in a high-intensity magnetic field, whereas the mask is written in a low-intensity magnetic field, and in that the low-intensity magnetic field recorded mask is erased first, and then the data, written in the high-intensity magnetic field, are read and processed.

3. The method according to claim 1 or 2, wherein data are recorded and read which are recorded with an azimuth angle with respect to the feed direction of the magnetic card (1).

4. A reader/writer for a magnetic card (1) provided with a magnetic coat (29, 30) for recording a mask and data, characterized by
- a low-intensity magnetic field write head (12) for writing a mask in the magnetic card (1) in a low-intensity magnetic field,
- a high-intensity magnetic field write head (14) for writing data in a high-intensity magnetic field,
- a read head (13, 15) for reading the mask and the data, - a card drive unit (11) for moving the magnetic card (1) forward and backward when writing and reading the mask and the data,
- a motor controller (8) for controlling the card drive unit (11),
- a mask writing and reading controller (9) for controlling the low-intensity magnetic field write head (12) and read head (13), and
- a data writing and reading controller (10) for controlling the high-intensity magnetic field write head (14) and read head (15).

5. The reader/writer according to claim 4, wherein a low-intensity magnetic field write head (12) for the mask, a high-intensity magnetic field write head (14) for the data, a mask read head (13) for reading the mask, and a data read head (15) for reading the data, four heads in total, are provided separately.

6. The reader/writer according to claim 4, wherein a write head (12, 14) for the low-intensity magnetic field writing of the mask and the high-intensity magnetic field writing of the data, and a read head (13, 15) for reading the mask and the data, two heads in total, are provided.

7. The reader/writer according to any of claims 4 to 6, wherein the read and write heads are adapted to write and read data, respectively, which are to be recorded with an azimuth angle with respect to the feed direction of the card (1).

Fig.1

EP 0 387 809 A1

## Fig. 2

### (a)

17 Mask Detection Area      17 Mask Detection Area

←── 18 Intermediate Area ──→

2

29   30   1

### (b)

29    30    2

1

## Fig. 3

16     11

27    27    27    27

22   19d   19c   19b   19a   20

23   26   24   12,13   25

14,15

L

EP 0 387 809 A1

# Fig. 4

```
┌─────────────────┐
│  Inserting of   │
│     Card        │
└─────────────────┘
        │
   ◇ 1st Sensor ◇
   ◇    ON     ◇
        │
┌─────────────────┐
│  Motor Turn in  │
│ Normal Direction│
└─────────────────┘
        │
   ◇ 2nd Sensor ◇
   ◇    ON      ◇
        │
┌─────────────────┐
│  Reading  of    │
│  Front End      │
│  Mask           │
└─────────────────┘
        │
   ◇ Judging of ◇ ──── NG
   ◇   Mask     ◇
        │ OK
┌─────────────────┐
│  Erasing  of    │
│  Mask           │
└─────────────────┘
        │
   ◇ 3rd Sensor ◇
   ◇    ON      ◇
        │
┌─────────────────┐
│  Reading  of    │
│  Data           │
└─────────────────┘
        │
   ◇ 4th Sensor ◇
   ◇    OFF     ◇
        │
┌─────────────────┐
│ Reading of Data │
│ is Finished and │
│ Motor Stops     │
└─────────────────┘
        │
┌─────────────────┐
│ Processing  of  │
│ Data            │
└─────────────────┘
```

```
   ◇ 4th Sensor ◇
   ◇    ON      ◇
        │
┌─────────────────┐
│  Reading  of    │
│  Rear End       │
│  Mask           │
└─────────────────┘
        │
   ◇ Judging of ◇ ── NG ··※·
   ◇   Mask     ◇
        │ OK
   ◇ 3rd Sensor ◇
   ◇    OFF     ◇
        │
┌─────────────────┐
│  Motor Turn in  │
│ Reverse Direction│
└─────────────────┘
        │
   ◇ 2nd Sensor ◇
   ◇    ON      ◇
        │
   ◇ 2nd Sensor ◇
   ◇    OFF     ◇
        │
┌─────────────────┐
│  Motor Turn in  │
│ Normal Direction│
└─────────────────┘
```

```
┌─────────────────┐
│  Motor Turn in  │
│ Reverse Direction│
└─────────────────┘
        │
   ◇ 3rd Sensor ◇
   ◇    ON      ◇
        │
┌─────────────────┐
│  Writing   of   │
│  Data           │
└─────────────────┘
        │
   ◇ 3rd Sensor ◇
   ◇    OFF     ◇
        │
┌─────────────────┐
│ Writing of Data │
│ is Finished and │
│ Motor Stops     │
└─────────────────┘
        │
┌─────────────────┐
│  Motor Turn in  │
│ Normal Direction│
└─────────────────┘
        │
   ◇ 3rd Sensor ◇
   ◇    ON      ◇
        │
┌─────────────────┐
│ Reading of Data │
│ is Finished and │
│ Checks          │
└─────────────────┘
        │
   ◇ 3rd Sensor ◇
   ◇    OFF     ◇
        │
┌─────────────────┐
│  Motor Stops    │
└─────────────────┘
        │
   ◇ Judging of ◇ ── NG
   ◇   Data    ◇ OK
```

```
┌─────────────────┐
│  Motor Turn in  │
│ Reverse Direction│
└─────────────────┘
        │
   ◇ 2nd Sensor ◇
   ◇    ON      ◇
        │
┌─────────────────┐
│  Writing   of   │
│  Mask           │
└─────────────────┘
        │
   ◇ 2nd Sensor ◇
   ◇    OFF     ◇
        │
┌─────────────────┐
│ Writing of Mask │
│ is Finished     │
└─────────────────┘
        │
   ◇ 1st Sensor ◇
   ◇    OFF     ◇
        │
┌─────────────────┐
│  Motor Stops    │
└─────────────────┘
        │
┌─────────────────┐
│  Removing  of   │
│  Card           │
└─────────────────┘
```

··※··
```
┌─────────────────┐
│  Motor Turn in  │
│ Reverse Direction│
└─────────────────┘
```

EP 0 387 809 A1

# Fig.5

## (a)

## (b)

# Fig.6

## (a)

Data

2

1

## (b)

Data

2

1

EP 0 387 809 A1

## DOCUMENTS CONSIDERED TO BE RELEVANT

EP 90104752.2

| Category | Citation of document with indication, where appropriate, of relevant passages | Relevant to claim | CLASSIFICATION OF THE APPLICATION (Int Cl⁵) |
|---|---|---|---|
| D,X | US - A - 4 237 189 (DEFFEYES) * Abstract; column 2, line 15 - column 3, line 6; fig. 4 * | 1,4 | G 11 B 5/02 G 11 B 5/80 |
| A | EP - A2 - 0 167 898 (AUTELCA AG) * Abstract; claims 1-12 * | 1 | |
| A | US - A - 3 790 754 (BLACK et al.) * Abstract * | 1 | |

TECHNICAL FIELDS SEARCHED (Int Cl⁵)

G 11 B    5/00
G 06 K  19/00
G 06 K    5/00
G 11 B  25/00
H 01 F  10/00
G 09 F    3/00

The present search report has been drawn up for all claims

| Place of search | Date of completion of the search | Examiner |
|---|---|---|
| VIENNA | 19-06-1990 | BERGER |